# FASCICULE DE BREVET EUROPEEN

(11) **EP 0 783 085 B1**
(45) Date de publication et mention de la délivrance du brevet: **31.10.2001**
(21) Numéro de dépôt: 96402914.4
(22) Date de dépôt: 27.12.1996
(51) Int. Cl.: F16L 41/08, F16L 5/10, F16L 55/11

(54) **Piece souple susceptible d'être montée dans une ouverture**
In einer Bohrung einsetzbarer flexibler Teil
Flexible piece for mounting into a bore

(30) Priorité: 03.01.1996 FR 9600021
(43) Date de publication de la demande: 09.07.1997
(73) Titulaire: LE JOINT FRANCAIS, Société en Nom Collectif, F-75008 Paris (FR)
(72) Inventeur: Dedieu, René, 28410 La Haye (FR); Ricordeau, Jacques, 72170 Beaumont S/Sarthe (FR); Alcaide, Jean-Philippe, 10002 Caceres (ES)
(74) Mandataire: Hurwic, Aleksander

(56) Documents cités:
- EP-A- 0 269 032
- FR-A- 2 637 351
- US-A- 2 756 793

## Description

La présente invention se rapporte à une pièce souple susceptible d'être montée dans une ouverture.

L'invention concerne le montage de pièces en matériau souple à chausser sur un support ou dans une découpe d'un support et notamment le montage d'éléments tels que des joints, manchettes, soufflets, manchons, obturateurs, coupelles et autres pièces à raccorder sur une paroi, à la périphérie de celle-ci ou dans une découpe borgne, ou traversante qu'elle présente.

Elle vise, plus précisément, un procédé de montage d'une pièce en matériau souple et élastique sur une support ou dans une découpe ainsi que les pièces en matériau souple et élastique notamment les manchettes, joints, soufflets, obturateurs, coupelles, manchons, et autres éléments de raccord pour la mise en oeuvre du procédé.

FR-A-2 637 351 décrit une pièce en élastomère de type manchons, soufflets, joints, obturateurs ou coupelles de réservoir de carburant de véhicules comportant un corps dont l'extrémité est munie d'un flanc et d'une lèvre mobile entre une première position repliée correspondant à la condition avant montage de la pièce, et une seconde position déployée correspondant à la condition montée de la pièce dans laquelle la lèvre forme avec ledit flanc une gorge de réception de la périphérie d'une découpe pratiquée dans une paroi sur laquelle la pièce est à monter. La manoeuvre de montage ou de démontage de la pièce du FR-A-2 637 351 s'effectue en saisissant la lèvre directement ou par un appendice pour l'amener en deçà ou au-delà du plan formé par la découpe sur laquelle la pièce est à monter. Le montage et le démontage de la pièce selon ce Brevet nécessite de saisir la lèvre et de la basculer au-delà du plan de l'ouverture sur laquelle la pièce est à monter.

Cette manoeuvre ne pose pas de problèmes particuliers dans le cas de pose de la pièce sur chaîne de montage lors de la fabrication d'un véhicule automobile. Par contre, les manoeuvres sont plus délicates à réaliser lors d'opérations d'entretien. Particulièrement, l'opération de dépose de la pièce nécessite le passage de la main ou d'un outil à travers l'ouverture sur laquelle la pièce est montée pour saisir la lèvre. Le démontage est particulièrement délicat dans les cas d'ouverture de faible diamètre. De plus, pour permettre la manoeuvre de la lèvre, on ne peut munir la pièce d'une membrane d'obturation de l'ouverture du côté externe dans les trous borgnes ou des ouvertures dont la face interne peut être rendue non accessible.

FR-A-2 637 351 ne décrit pas la position d'une quelconque membrane ou paroi d'étanchéité. Toutefois, si on voulait équiper cette pièce avec une telle paroi ou une telle membrane, celle-ci devrait nécessairement se trouver au-delà de la position déployée de la lèvre pour ne pas en gêner l'accès nécessaire à la manoeuvre de montage.

C'est par conséquent un but de la présente invention d'offrir une pièce souple susceptible d'être chaussée sur une ouverture ou découpe d'un support notamment du type obturateurs, bouchons, joints, manchettes, soufflets, manchons, coupelles ou autres pièces à raccorder sur une paroi à la périphérie de celle-ci, dans une découpe borgne ou traversante qu'elle présente, permettant des montages et déposes multiples.

C'est également un but de la présente invention d'offrir une telle pièce comportant une paroi assurant le scellement hermétique de l'ouverture pratiquée dans la paroi.

C'est aussi un but de la présente invention d'offrir une telle pièce souple susceptible d'être montée sur des ouvertures de faibles diamètres.

C'est également un but de la présente invention d'offrir des bouchons, obturateurs ou caches permettant la pose, l'accès, l'inspection et/ou la maintenance d'équipements d'acquisition de données, notamment de capteurs, disposés derrière une paroi.

Ces buts sont atteints selon la présente invention par une pièce en matériau souple comportant une lèvre de fixation pouvant prendre une première position stable correspondant à la condition avant montage ou de dépose de la pièce et une seconde position stable correspondant à une condition montée de la pièce dans laquelle la lèvre forme avec un élément de la pièce une gorge de réception de la périphérie d'une paroi ou analogue à chausser, où ladite pièce comporte en outre, un pied relié mécaniquement à ladite lèvre de fixation ainsi qu'à une zone de transition, elle-même reliée à un élément fonctionnel, et où des moyens de préhension et/ou de manoeuvre de la lèvre de fixation sont reliés mécaniquement à cette lèvre de manière à ce qu'une force exercée sur les moyens de préhension et/ou de manoeuvre et transmise à la zone de transition assure le déplacement de la lèvre de fixation entre ces deux positions stables.

Avantageusement, les moyens de préhension de manoeuvre de la lèvre sont reliés mécaniquement à des points d'ancrage régulièrement répartis sur la zone de transition liée mécaniquement à la lèvre à manoeuvrer.

Avantageusement, la pièce comporte un axe de symétrie et les moyens de préhension et de manoeuvre comportent des nervures s'étendant radialement à partir d'un point dudit axe.

Avantageusement, la pièce est un obturateur et comporte une membrane d'étanchéité.

Avantageusement, la gorge de réception de la périphérie de la paroi à chausser est sensiblement parallèle à la membrane d'étanchéité.

Avantageusement, en coupe longitudinale de ladite pièce, la zone de transition est sensiblement tronconique, elle-même reliée à un élément fonctionnel notamment à une membrane d'étanchéité.

Avantageusement, du côté des moyens de préhension et de manoeuvre, la zone de transition forme un tronc de cône convexe dans la condition avant montage de la pièce et un tronc de cône concave dans la condition montée de la pièce, et les positions de l'élément fonctionnel dans les conditions avant montage et montées de la pièce sont parallèles.

Avantageusement, une force parallèle à l'axe de la pièce en direction de la paroi à chausser déplace ladite pièce de la condition avant montage à la condition montée.

Avantageusement, une force parallèle à l'axe de la pièce dirigée à l'opposé de la paroi à chausser assure le passage de la pièce de la condition montée à la condition démontée ou de dépose.

Avantageusement, le pied comporte une zone radialement externe d'appui sur la paroi à chausser à l'opposé d'une zone radialement interne d'attache de la lèvre de fixation, de manière à ce qu'une traction sur les moyens de préhension et de manoeuvre dirigée parallèlement à l'axe de la pièce à l'opposé de la paroi à chausser, provoque, par l'intermédiaire de la zone de transition un arc-boutement de la zone d'appui sur la paroi à chausser et un repliement de la lèvre de fixation en direction des moyens de préhension et de manoeuvre.

Avantageusement, la pièce comporte un lien inextensible souple reliant directement ou indirectement les moyens de préhension et de manoeuvre à la lèvre de fixation, ce lien ayant une longueur suffisante pour ne pas gêner le déploiement de la lèvre de fixation lors du montage de la pièce tout en étant suffisamment courte pour exercer une traction sur la lèvre vers sa position repliée lors du démontage de la pièce.

La présente invention sera mieux comprise au moyen de la description ci-après et des figures annexées données comme des exemples non limitatifs et sur lesquelles :
- la figure 1 est une vue en coupe longitudinale selon I-I d'un premier exemple de réalisation d'une pièce selon la présente invention avant montage ;
- la figure 2 est une vue en coupe longitudinale selon I-I de la pièce de la figure 1 en condition montée dans une ouverture d'une paroi ;
- la figure 3 comporte une vue en coupe longitudinale et une vue du dessus de la pièce de la figure 1 ;
- la figure 4 est une vue en coupe longitudinale selon IV-IV d'une variante de réalisation de la pièce selon la présente invention en condition montée ;
- la figure 5 comporte une vue en coupe longitudinale et une vue de dessus de la pièce de la figure 4.

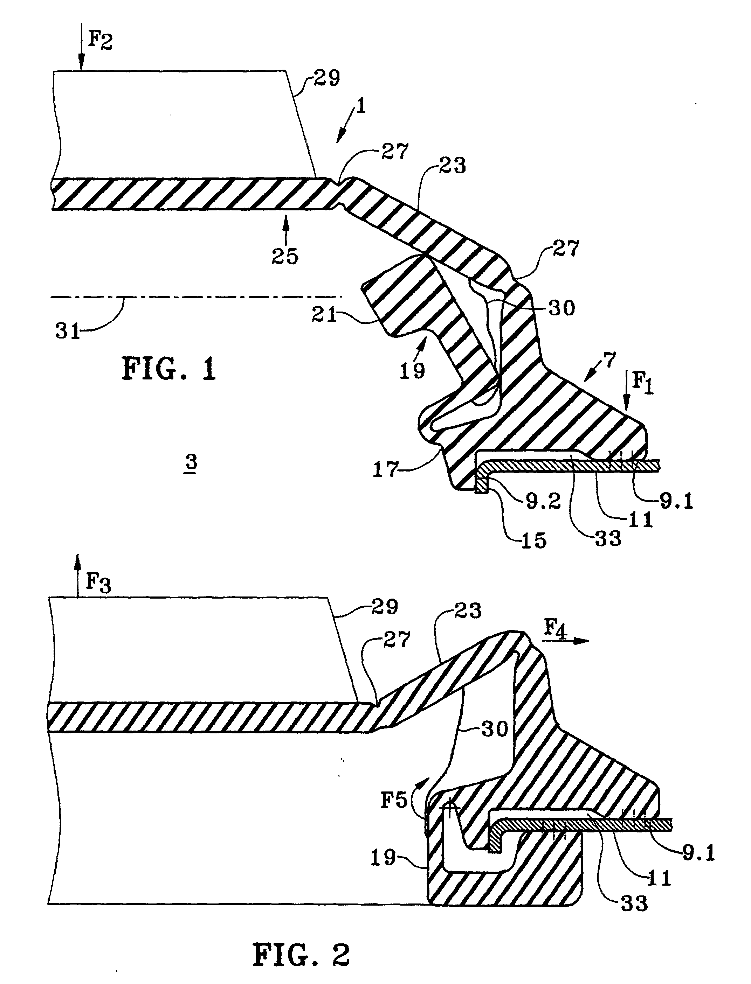

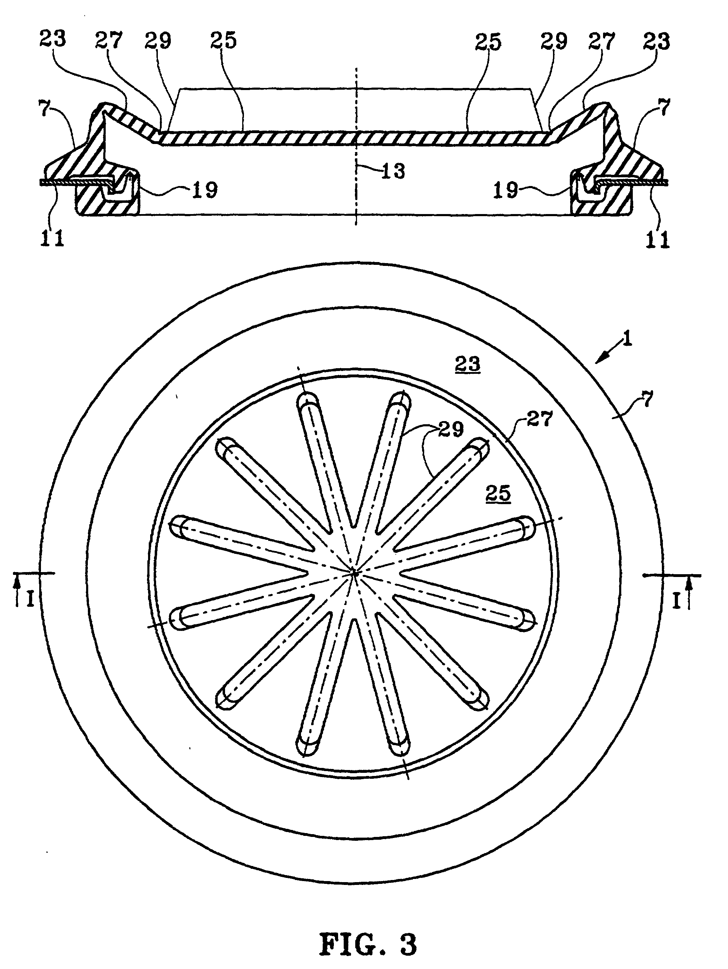

Sur les figures 1 à 5, on a utilisé les mêmes références pour désigner les mêmes éléments.

Sur les figures 1 à 3, on peut voir un premier exemple de réalisation d'une pièce 1 selon l'invention, plus particulièrement d'un obturateur d'une ouverture 3 pratiquée dans un tablier de véhicule automobile en vue de permettre l'inspection, la maintenance et/ou le remplacement d'un capteur, notamment d'une jauge de carburant (non représentée).

La pièce 1 selon l'invention comporte un pied 7 comportant au moins une zone d'appui 9 sur la périphérie d'une paroi 11, par exemple sur la paroi 11 du tablier dans lequel a été ménagée l'ouverture 3. Dans l'exemple avantageux illustré, le pied 7 comporte une zone d'appui axiale 9.1 exerçant une force d'appui F1 dirigée vers le tablier parallèlement à un axe 13 de la pièce 1 et une zone d'appui radiale 9.2 prenant appui sur la surface interne d'un bord tombant ou d'une collerette 15 située à la périphérie de l'ouverture 3. Au pied 7 est fixée, avantageusement par des zones de faible épaisseur formant des charnières 17, une lèvre de fixation 19 munie d'une zone d'appui 21. Une zone de transition 23, avantageusement tronconique, relie le pied 7 à un élément fonctionnel 25 avantageusement par l'intermédiaire des deux zones de faible épaisseur formant des charnières 27.

Dans l'exemple de réalisation illustrée sur les figures 1 à 3, l'élément fonctionnel 25 comporte une paroi d'obturation et de scellement hermétique de l'ouverture 3.

La pièce 1 selon l'invention comporte des moyens 29 de préhension et de manoeuvre permettant de déformer élastiquement des éléments de la pièce 1, de manière à permettre le déploiement de la lèvre 19 vers la position illustrée sur la figure 2, avec l'application de la zone d'application 21 sur la paroi 11 assurant la fixation de la pièce ou, au contraire, le repliement de la lèvre 19 vers la position illustrée sur la figure 1, permettant la dépose de la pièce 1.

Dans l'exemple avantageux illustré, les moyens 29 de préhension et de manoeuvre sont disposés sur l'élément fonctionnel 25 de manière à être facilement accessibles et pouvoir être saisis avec les doigts ou avec une pince.

L'exemple avantageux illustre les moyens 29 de préhension et de manoeuvre comportant au moins une, de préférence plusieurs nervures radiales améliorant la rigidité radiale dans les deux conditions stables de la pièce, de manière à améliorer la fixation de la pièce dans l'ouverture 3.

Avantageusement, un lien inextensible 30 relie la zone de transition 23 à la lèvre de fixation 19, de manière à faciliter le repliement de cette dernière lors des opérations de dépose de la pièce 1 selon l'invention.

Nous allons maintenant expliquer le fonctionnement de la pièce 1 de la présente invention.

On dispose tout d'abord la pièce 1 dans l'ouverture 3, la zone d'appui radiale 9.2 assurant avantageusement le centrage de la pièce dans l'ouverture 3 permettant de travailler en aveugle dans des emplacements difficilement accessibles.

Un éventuel bord tombant de la paroi 11 formant la collerette 15 améliore avantageusement le centrage. Toutefois, il est bien entendu qu'une pièce 1 selon la présente invention, fixée dans des ouvertures 3 dépourvues de collerettes 15, ne sort pas du cadre de la présente invention.

La zone d'appui 9.1 prend appui sur la paroi 11 du tablier.

On exerce sur un moyen de préhension et de manoeuvre 29 une force parallèle à l'axe 13 de la pièce 1, dirigée vers le tablier. La force F₂ est transmise à la zone de transition 23 qui emmagasine tout d'abord l'énergie élastique lors de la descente vers un plan 31 passant le sommet du pied 7 puis bascule vers la position stable illustrée sur la figure 2 correspondant à la condition montée de la pièce 1 selon la présente invention.

La descente de la zone de transition 23 entraîne la descente de la lèvre 19 qui bascule autour des charnières 17, la zone d'appui 21 venant prendre appui sur la face opposée de la paroi 11 à celle recevant la zone d'appui 9.1 du pied 7.

Il en résulte que le pied 7 forme avec la lèvre de fixation 19 une gorge 33 de réception de l'extrémité de la paroi 11. Dans l'exemple avantageux illustré sur les figures, la pièce 1 dans la condition montée est particulièrement compacte grâce à la descente en direction de l'ouverture 3 de l'élément fonctionnel 25 et des moyens 29 de préhension et de manoeuvre.

La dépose de la pièce 1 s'effectue par traction selon la flèche F₃ opposée à la flèche F₂ assurant le déploiement de la zone de transition 23 et le repliement autour des charnières 17 de la lèvre de fixation 19, puis le retrait de la pièce 1 de l'ouverture 3.

La traction selon la flèche F₃ provoque l'expansion radiale de l'extrémité supérieure du pied selon la flèche F₄ qui s'arc-boute sur la zone d'appui 9.1 assurant le repliement de la lèvre de fixation 19 selon la flèche F₅.

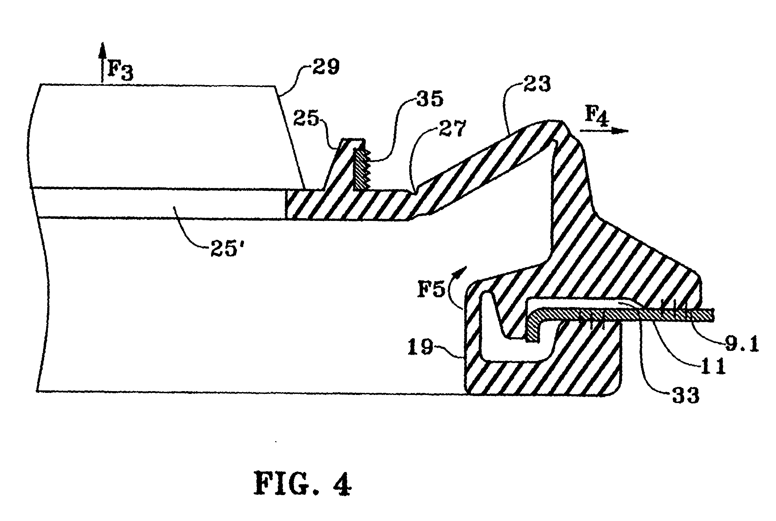

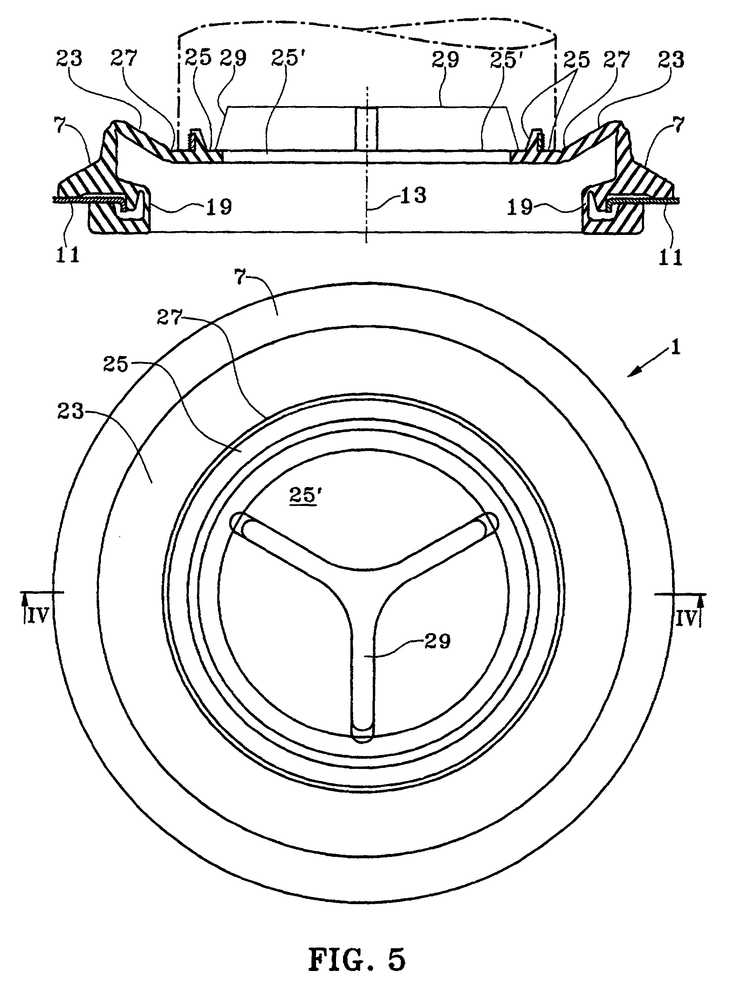

Il est bien entendu que la présente invention n'est pas limitée aux bouchons et aux obturateurs mais, dans les limites des revendications, s'étend également à toutes pièces en un matériau souple à chausser sur une ouverture, telles que des joints, des manchettes, des soufflets, des manchons, des coupelles ou autres. Sur les figures 4 et 5, on peut voir un exemple de raccords selon la présente invention, comportant un élément fonctionnel 25 comprenant des moyens de fixations d'un anneau fileté 35 permettant le raccordement d'un connecteur comportant le filetage adapté illustré en trait mixte sur la figure 5. La partie centrale de la pièce 1 doit comporter une ouverture 25' de passage de fluide. Dans l'exemple avantageux illustré sur la figure 5, les moyens 29 de préhension et de manoeuvre comportent uniquement trois nervures, de manière à ce qu'elles n'empiètent pas trop sur le passage des fluides 25' et ne provoquent pas une perte de charge importante.

La pièce 1 selon la présente invention peut être réalisée en tout matériau souple, notamment en élastomère ou en matière thermoplastique. La pièce 1 peut être réalisée dans un matériau homogène ou peut comporter des matériaux présentant diverses duretés et rigidités le long de son envergure périphérique ou radiale.

La pièce selon la présente invention peut avoir diverses formes notamment circulaires, ovales ou elliptiques et peut s'étendre sur une surface gauche correspondant à la forme de l'ouverture 3 qu'elle est destinée à chausser.

Avantageusement, la pièce 1 selon l'invention est réalisée en un matériau souple dont la dureté est comprise entre 50 et 80 Shore A. D'excellents résultats ont été obtenus avec des pièces réalisées en PVC, en EPDM et en un matériau vendu par la Société DUPONT DE NEMOURS sous la dénomination VITON.

La présente invention s'applique notamment à la chaudronnerie, à la réalisation de raccords, joints, et des moyens de connexion, et particulièrement à l'industrie automobile.

## Revendications

1. Pièce en matériau souple comportant une lèvre (19) de fixation pouvant prendre une première position stable correspondant à la condition avant montage ou de dépose de la pièce (1) et une seconde position stable correspondant à une condition montée de la pièce (1) dans laquelle la lèvre (19) forme avec un élément (7) de la pièce (1) une gorge (33) de réception de la périphérie d'une paroi (11) ou analogue à chausser, où ladite pièce comporte en outre, un pied (7) relié mécaniquement à ladite lèvre de fixation (19) ainsi qu'à une zone de transition (23), elle-même reliée à un élément fonctionnel (25), et où des moyens (29) de préhension et/ou de manoeuvre de la lèvre de fixation (19) sont reliés mécaniquement à cette lèvre, ladite pièce **caractérisée en ce qu'**une force (F₂) exercée sur les moyens (29) de préhension et/ou de manoeuvre et transmise à la zone de transition (23) assure le déplacement de la lèvre de fixation (19) entre ces deux positions stables.

2. Pièce selon la revendication 1, caractérisée en en ce qu'elle comporte un axe de symétrie (13) et en ce que les moyens de préhension et de manoeuvre comportent des nervures (29) s'étendant radialement à partir d'un point dudit axe (13).

3. Pièce selon la revendication 1 ou 2, **caractérisée en ce que** ladite pièce (1) est un obturateur et **en ce qu'**elle comporte une membrane d'étanchéité (25).

4. Pièce selon la revendication 3, **caractérisée en ce que** la gorge (33) de réception de la périphérie de la paroi à chausser (11) est sensiblement parallèle à la membrane d'étanchéité (25).

5. Pièce selon l'une quelconque des revendications précédentes, caractérisée en ce la zone (23) de transition est sensiblement tronconique.

6. Pièce selon la revendication 5, **caractérisée en ce que** du côté des moyens (29) de préhension et de manoeuvre, la zone de transition (23) forme un tronc de cône convexe dans la condition avant montage de la pièce (1) et un tronc de cône concave dans la condition montée de la pièce (1), et **en ce que** les positions de l'élément fonctionnel (25) dans les conditions avant montage et montée de la pièce (1) sont parallèles.

7. Pièce selon l'une quelconque des revendications 2 à 6, **caractérisée en ce qu'**une force (F₂) parallèle à l'axe (13) de la pièce (1) en direction de la paroi (11) à chausser déplace ladite pièce de la condition avant montage à la condition montée.

8. Pièce selon l'une quelconque des revendications 2 à 7, **caractérisée en ce qu'**une force (F₃) parallèle à l'axe (13) de la pièce (1) dirigée à l'opposé de la paroi (11) à chausser assure le passage de la pièce de la condition montée à la condition démontée ou de dépose.

9. Pièce selon la revendication 5, 6, 7 ou 8, **caractérisée en ce que** le pied (7) comporte une zone radialement externe d'appui (9.1) sur la paroi (11) à chausser à l'opposé d'une zone (17) radialement interne d'attache de la lèvre de fixation (19), de manière à ce qu'une traction sur les moyens (29) de préhension et de manoeuvre dirigée parallèlement à l'axe (13) de la pièce (1) à l'opposé de la paroi (11) à chausser, provoque, par l'intermédiaire de la zone de transition (23), un arc-boutement de la zone d'appui (9.1) sur la paroi (11) à chausser et un repliement de la lèvre de fixation (19) en direction des moyens (29) de préhension et de manoeuvre.

10. Pièce selon l'une quelconque des revendications précédentes, **caractérisée en ce qu'**elle comporte un lien inextensible souple (30) reliant directement ou indirectement les moyens (29) de préhension et de manoeuvre à la lèvre de fixation (19), ce lien ayant une longueur suffisante pour ne pas gêner le déploiement de la lèvre de fixation (19) lors du montage de la pièce (1) tout en étant suffisamment courte pour exercer une traction sur la lèvre (19) vers sa position repliée lors du démontage de la pièce (1).

## Patentansprüche

1. Teil aus elastischem bzw. biegsamem Material, das eine Befestigungslippe (19) hat, die eine erste stabile Position einnehmen kann, welche dem Zustand vor der Montage oder des Abnehmens des Teils (1) entspricht, und eine zweite stabile Position, welche einem montierten Zustand des Teils (1) entspricht, in dem die Lippe (19) mit einem Element (7) des Teils (1) eine Nut bzw. Hohlkehle (33) für die Aufnahme des Umfangs einer Wand (11) o. dgl. zum Anlegen bildet, wobei dieses Teil außerdem einen Fuß (7) hat, der mechanisch mit der Befestigungslippe (19) verbunden ist, sowie eine Übergangszone (23), die ihrerseits mit einem funktionellen Element (25) verbunden ist, und wobei Mittel (29) des Greifens und/oder des Handhabens der Befestigungslippe (19) mechanisch mit dieser Lippe verbunden sind, wobei dieses Teil **dadurch gekennzeichnet ist, dass**, eine Kraft (F₂), die auf die Mittel (29) des Greifens und/oder des Handhabens ausgeübt und auf die Übergangszone (23) übertragen wird, die Verlagerung der Befestigungslippe (19) zwischen diesen beiden stabilen Positionen sicherstellt.

2. Teil gemäß Anspruch 1, **dadurch gekennzeichnet, dass** es eine Symmetrieachse (13) hat, und dass die Mittel des Greifens und des Handhabens Rippen (29) enthalten, welche sich radial ausgehend von einem Punkt der genannten Achse (13) erstrecken.

3. Teil gemäß Anspruch 1 oder 2, **dadurch gekennzeichnet, dass** das Teil (1) ein Absperrorgan ist, und dass es eine Dichtheits- bzw. Abdichtungsmembrane (25) hat.

4. Teil gemäß Anspruch 3, **dadurch gekennzeichnet, dass** die Nut bzw. Hohlkehle (33) für die Aufnahme des Umfangs der Wand zum Anlegen (11) im wesentlichen parallel zu der Dichtheits- bzw. Abdichtungmembrane (25) ist.

5. Teil gemäß irgendeinem der vorhergehenden Ansprüche, **dadurch gekennzeichnet, dass** die Zone (23) des Übergangs im wesentlichen kegelstumpfförmig ist.

6. Teil gemäß Anspruch 5, **dadurch gekennzeichnet, dass** die Zone des Übergangs (23) von der Seite der Mittel (29) des Greifens und des Handhabens einen konvexen Konusstumpf in dem Zustand vor der Montage des Teils (1) und einen konkaven Konusstumpf in dem montierten Zustand des Teils (1) bildet, und dass die Positionen des funktionellen Elements (25) in den Zuständen vor der Montage und des Montiertseins des Teils (1) parallel sind.

7. Teil gemäß irgendeinem der Ansprüche 2 bis 6, **dadurch gekennzeichnet, dass** eine Kraft (F₂) parallel zur Achse (13) des Teils (1) in Richtung der Wand (11) zum Anlegen das Teil aus dem Zustand vor der Montage in den montierten Zustand verlagert.

8. Teil gemäß irgendeinem der Ansprüche 2 bis 7, **dadurch gekennzeichnet, dass** eine Kraft (F₃) parallel zur Achse (13) des Teils (1), die entgegengesetzt zu der Wand (11) zum Anlegen gerichtet ist, den Übergang des Teils aus dem montierten Zustand in den demontierten oder abgenommenen Zustand sicherstellt.

9. Teil gemäß dem Anspruch 5, 6, 7 oder 8, **dadurch gekennzeichnet, dass** der Fuß (7) eine radial externe Zone der Anlage (9.1) auf der Wand (11) zum Anlegen entgegengesetzt einer radial internen Zone (17) der Befestigung der Befestigungslippe (19) derart hat, dass ein Zug auf die Mittel (29) des Greifens und des Handhabens, der parallel zur Achse (13) des Teils (1) entgegengesetzt zu der Wand (11) zum Anlegen gerichtet ist, durch Vermittlung der Zone des Übergangs (23) eine Absteifung der Anlagezone (9.1) auf der Wand (11) zum Anlegen und ein Zurückklappen bzw. Umbiegen der Befestigungslippe (19) in Richtung der Mittel (29) des Greifens und des Handhabens hervorruft.

10. Teil gemäß irgendeinem der vorhergehenden Ansprüche, **dadurch gekennzeichnet, dass** es ein unausdehnbares biegsames bzw. elastisches Band (30) hat, welches die Mittel (29) des Greifens und des Handhabens direkt oder indirekt mit der Befestigungslippe (19) verbindet, wobei dieses Band eine Länge hat, die genügend ist, dass die Entfaltung der Befestigungslippe (19) während der Montage des Teils (1) nicht behindert wird, wobei es trotzdem genügend kurz ist, um einen Zug auf die Lippe (19) nach ihrer umgeschlagenen Position während der Demontage des Teils (1) auszuüben.

## Claims

1. Part made of flexible material, comprising a fixing lip (19) which is able to take up a first stable position corresponding to the state before the mounting or fitting of the part (1) and a second stable position corresponding to a mounted state of the part (1), wherein the lip (19) forms, with an element (7) of the part (1), a groove (33) for receiving the periphery of a wall (11) or the like which is to be fitted with a trim, wherein said part further comprises a foot (7) mechanically connected to said fixing lip (19) and to a transition zone (23) which is in turn connected to a functional element (25), and wherein means (29) for gripping and/or manoeuvring the fixing lip (19) are mechanically connected to this lip, said part being **characterised in that** a force (F₂) exerted on the gripping and/or manoeuvring means and transmitted to the transition zone (23) causes the fixing lip (19) to be moved between these two stable positions.

2. Part according to claim 1, **characterised in that** it comprises an axis of symmetry (13) and **in that** the gripping and/or manoeuvring means comprise ribs (29) extending radially from a point on said axis (13).

3. Part according to claim 1 or 2, **characterised in that** the part (1) is a shut-off member and **in that** it comprises a sealing membrane (25).

4. Part according to claim 3, **characterised in that** the groove (33) for receiving the periphery of the wall (11) which is to be fitted with a trim is substantially parallel to the sealing membrane (25).

5. Part according to any one of the preceding claims, **characterised in that** the transition zone (23) is substantially frustum-shaped.

6. Part according to claim 5, **characterised in that**, at the end containing the gripping and manoeuvring means (29), the transition zone (23) forms a convex truncated cone in the pre-mounting state of the part (1) and a concave truncated cone in the mounted state of the part (1), and **in that** the positions of the functional element (25) in the pre-mounting and mounted states of the part (1) are parallel.

7. Part according to any one of claims 2 to 6, **characterised in that** a force (F₂) parallel to the axis (13) of the part (1) in the direction of the wall (11) which is to be fitted with a trim moves said part from the state prior to mounting to the mounted state.

8. Part according to any one of claims 2 to 7, **characterised in that** a force (F₃) parallel to the axis (13) of the part (1) directed away from the wall (11) which is to be fitted with a trim causes the part to move from the mounted state to the dismantled or removed state.

9. Part according to claim 5, 6, 7 or 8, **characterised in that** the foot (7) comprises a radially outer zone (9.1) for abutting on the wall (11) which is to be fitted with a trim, opposite a radially inner zone (17) for the attachment of the fixing lip (19), so that pulling on the gripping and manoeuvring means (29) in the direction parallel to the axis (13) of the part (1) away from the wall (11) which is to be trimmed causes the abutment zone (9.1) to be buttressed on the wall (11) which is to be trimmed, via the transition zone (23), and causes the fixing lip (19) to be bent in the direction of the gripping and manoeuvring means (29).

10. Part according to any one of the preceding claims, **characterised in that** it comprises a flexible inextensible tie (30) which directly or indirectly connects the gripping and manoeuvring means (29) to the fixing lip (19), this tie being long enough so that it does not impede the deployment of the fixing lip (19) during the mounting of the part (1) while being short enough to exert a pull on the lip (19) into its retracted position when the part (1) is removed.
